(19) Europäisches Patentamt
European Patent Office
Office européen des brevets

(11) **EP 4 588 330 A1**

(12) **EUROPEAN PATENT APPLICATION**

(43) Date of publication:
**23.07.2025 Bulletin 2025/30**

(21) Application number: **24220881.7**

(22) Date of filing: **18.12.2024**

(51) International Patent Classification (IPC):
**A01D 41/14** (2006.01)

(52) Cooperative Patent Classification (CPC):
**A01D 41/144; A01D 41/141; A01D 41/145**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024 US 202463622146 P**

(71) Applicant: **MacDon Industries Ltd.**
**Winnipeg Manitoba R3J 3S3 (CA)**

(72) Inventors:
- **Cyrus, Nigon**
  **Wisconsin, 53532 (US)**
- **Reid, Christ**
  **Wisconsin, 53532 (US)**

(74) Representative: **Jostarndt Patentanwalts-AG**
**Metzgerstraße 61**
**52070 Aachen (DE)**

(54) **LATERALLY SEGMENTED HARVESTING HEADER COMPRISING A CENTER SECTION DEPENDENT HEIGHT CONTROL FOR THE SIDE WING SECTIONS AND CORRESPONDING ADJUSTMENT METHOD**

(57) The present invention relates to a method for adjusting a header mounted on an agricultural harvester. The header (10) includes a central section (16) and a plurality of side wing sections (18). Each of the plurality of side wing sections extends between an inner portion and an outer portion (14), wherein each inner portion is pivotally coupled to the central section. Each of the side wing sections includes a height-adjustable ground engaging device (32) the outer portion. The method comprises the steps of determining a height of the central section and an outer wing height based on a height of one of the plurality of outer portions, and determining whether the outer wing height is within a threshold of the height of the central section. If yes, the height of the side wing sections is adjusted appropriately until the determined outer wing height falls within the threshold.

FIG. 2

**Description**

## CROSS-REFERENCE TO RELATED APPLICAITONS

This application claims priority to U.S. provisional patent application no. 63/622,146, filed on January 18, 2024, the disclosure of which is incorporated herein by reference.

## TECHNICAL FIELD

The present invention relates to systems and methods for controlling the height of a ground engaging device on a header for harvesting row crops.

## BACKGROUND OF THE INVENTION

Headers for harvesting row crops, such as corn, are known in the art. The use of skid shoes for setting and maintaining a cut height of the header and engaging the surface of the field as the header is moved across the field for harvesting the row crops is also known in the art. The position of the skid shoes is typically manually adjusted by an operator using header controls that are independent from the combine controls. In addition, when native combine controls are used to adjust the header height, the skid shoe height is not responsive to those adjustments.

## SUMMARY OF THE INVENTION

According to one aspect of the invention, a method is provided for adjusting a header mounted on an agricultural harvester. The header includes a central section and a plurality of side wing sections. Each of the plurality of side wing sections extends between an inner portion and an outer portion. The inner portion of each of the plurality of side wing sections is pivotally coupled to the central section. Each of the plurality of side wing sections includes a ground engaging device mounted on the side wing section adjacent the outer portion. Each ground engaging device has an adjustable height. The method comprises the steps of determining a height of the central section of the header, determining an outer wing height based on a height of one of the plurality of outer portions, determining whether the outer wing height is within a threshold of the height of the central section, and if it is determined that the outer wing height is not within the threshold of the height of the central section, adjusting the height of the ground engaging device until the outer wing height is within the threshold the height of the central section.

According to another aspect of the invention, a system is provided on a header mounted on an agricultural harvester. The header includes a central section and a plurality of side wing sections. Each of the side wing sections extends between an inner portion and an outer portion. The inner portion of each of the plurality of side wing sections is pivotally coupled to the central section. Each of the plurality of side wing sections includes a ground engaging device mounted on the side wing section adjacent the outer portion. Each ground engaging device has an adjustable height. The system comprises a center sensor, an outer sensor and a processor. The center sensor is configured to measure a height of the central section. The outer sensor is configured to measure a height of one of the plurality of outer portions. The processor is configured to use the height of the one of the plurality of outer portions to determine an outer wing height, determine whether the outer wing height is within a threshold of the height of the central section, and if the processor determines that the outer wing height is not within the threshold of the height of the central section, the processor is configured to instruct a control unit to adjust the height of the ground engaging device until the outer wing height is within the threshold of the height of the central section.

## BRIEF DESCRIPTION OF THE DRAWINGS

Advantages of the present invention will be readily appreciated as the same becomes better understood by reference to the following detailed description when considered in connection with the accompanying drawings wherein:

Figure 1 is a perspective view of a header for harvesting row crops according to one embodiment of the present invention;

Figure 2 is a front view of the header of Figure 1 showing a pair of side wing sections pivoting upwardly relative to a center section;

Figure 3 is a front view of the header of Figure 1 showing the side wing sections pivoting downwardly relative to a center section;

Figure 4 is a front view of the header of Figure 1 where skid shoes on the header are fully extended;

Figure 5 is a side view of the header of Figure 4;

Figure 6 is a front view of the header of Figure 1 where the skid shoes are partially extended;

Figure 7 is a side view of the header of Figure 6;

Figure 8 is a front view of the header of Figure 1 where the skid shoes are fully retracted;

Figure 9 is a side view of the header of Figure 8;

Figure 10 is a fragmentary front view of the header frame of the header of Figure 1;

Figure 11 is an enlarged fragmentary view of a flex position sensor on the header of Figure 10;

Figure 12 is a perspective view of the flex position sensor of Figure 11;

Figure 13 is a schematic view of a system to control components of the header of Figure 1;

Figure 14 illustrates a control logic used to control components of the header according to one embodiment of the present invention;

Figure 15 is a front view of the header of Figure 1 in a first configuration under the control logic of Figure 14;

Figure 16 is a front view of the header of Figure 1 in a second configuration under the control logic of Figure 14; and

Figure 17 is a front view of the header of Figure 1 in a third configuration under the control logic of Figure 14.

## DETAILED DESCRIPTION OF EXAMPLE EMBODIMENTS

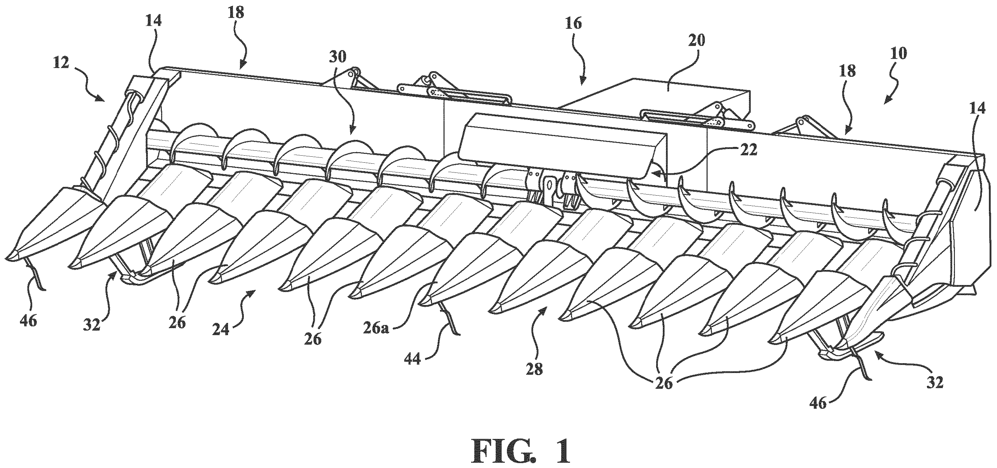

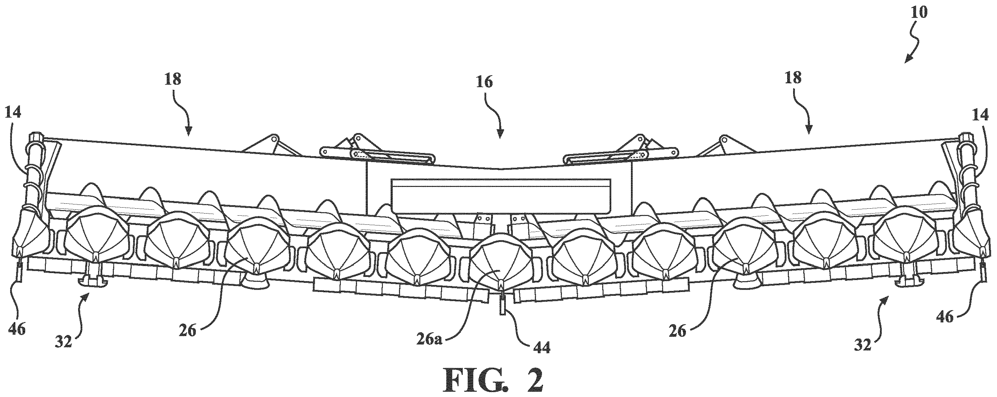

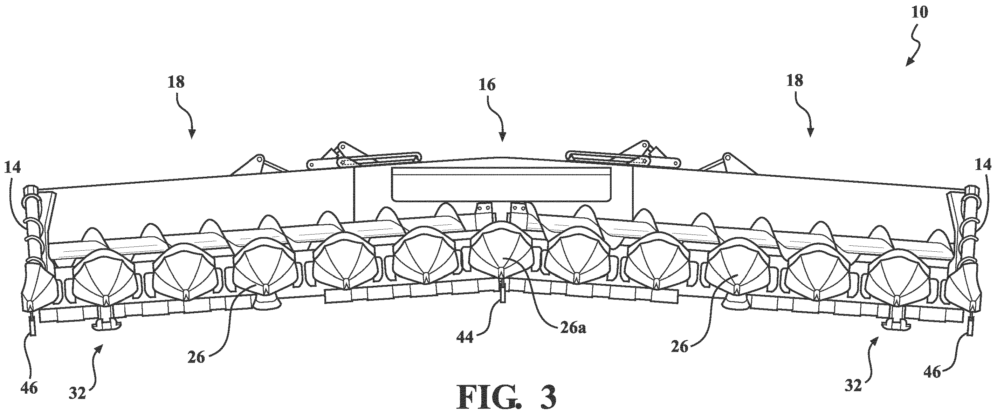

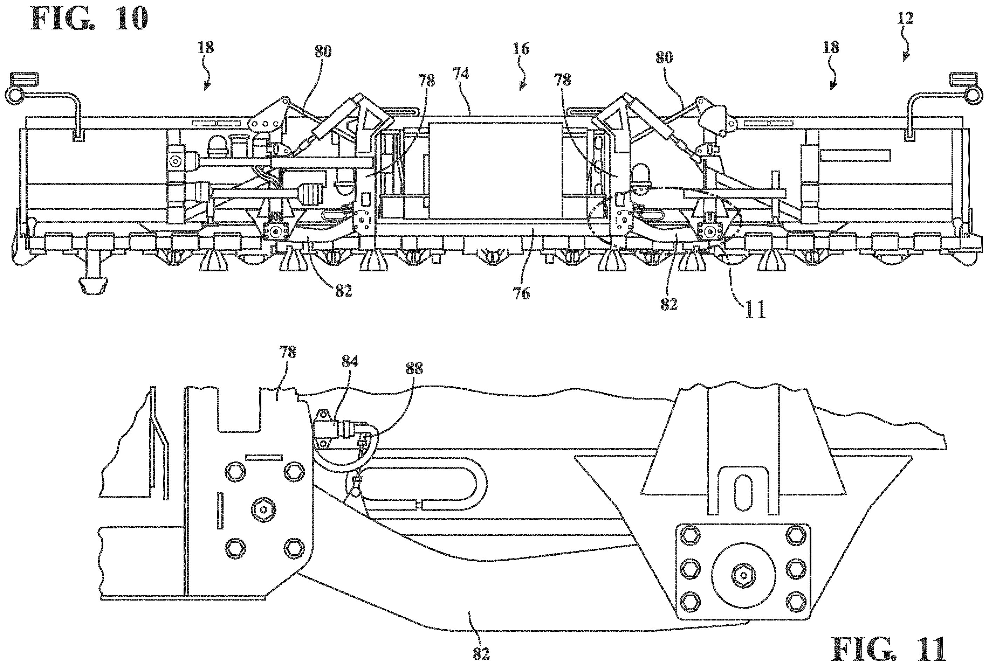

Referring to the Figures, where like numerals indicate like or corresponding parts throughout the several views, a header for harvesting row crops, especially corn, is shown generally at 10. Referring to Figure 1, the header 10 includes a header frame 12 extending laterally between opposing ends 14 with a center section 16 and a pair of side wing sections 18 pivotally coupled thereto. The center section 16 of the header frame 12 is adapted for mounting to a feeder house 20 on an agricultural implement, machine or harvester, such as a combine. Referring to Figure 10, the center section 16 of the header frame 12 includes a top portion 74 and a bottom portion 76 extending laterally between a pair of opposing side edges 78. Each side wing section 18 is pivotally coupled to the center section 16 by at least an upper link 80 and a lower link 82. As reflected in Figures 2 and 3, the side wing sections 18 are independently pivotable upwardly and downwardly relative to the center section 16 of the header frame 12 to follow or contour to a surface of a field as the header 10 is moved across the field for harvesting the row crops. Referring to Figure 1, an aperture 22 extends through the center section 16 of the header frame 12 to transfer crops from the header 10 to the agricultural implement for collection or further processing.

The header 10 further includes a crop cutting and conditioning system, shown generally at 24, operatively mounted on the header frame 12 between the ends 14 thereof for cutting, crimping and conditioning the crops to be harvested. A plurality of conical snouts 26 are positioned on the side wing sections 18, and a center conical snout 26a is positioned on the center section 16 of the header frame 12. These snouts 26, 26a direct the row crops into channels 28 where various components of the crop cutting and conditioning system 24, such as snap rolls, chopping knives and gathering chain drives, are operatively mounted to cut, crimp and condition stalks of the crops as the stalks enter the channels 28. The conical snouts 26 correspondingly pivot with the side wing section 18 relative to the center section 16, as shown in Figures 2 and 3.

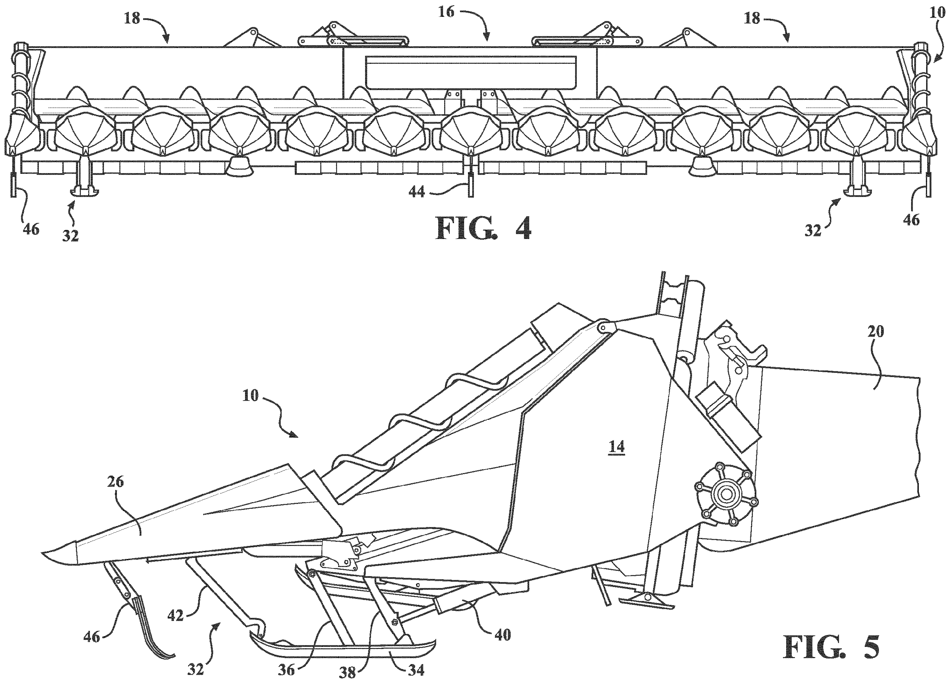

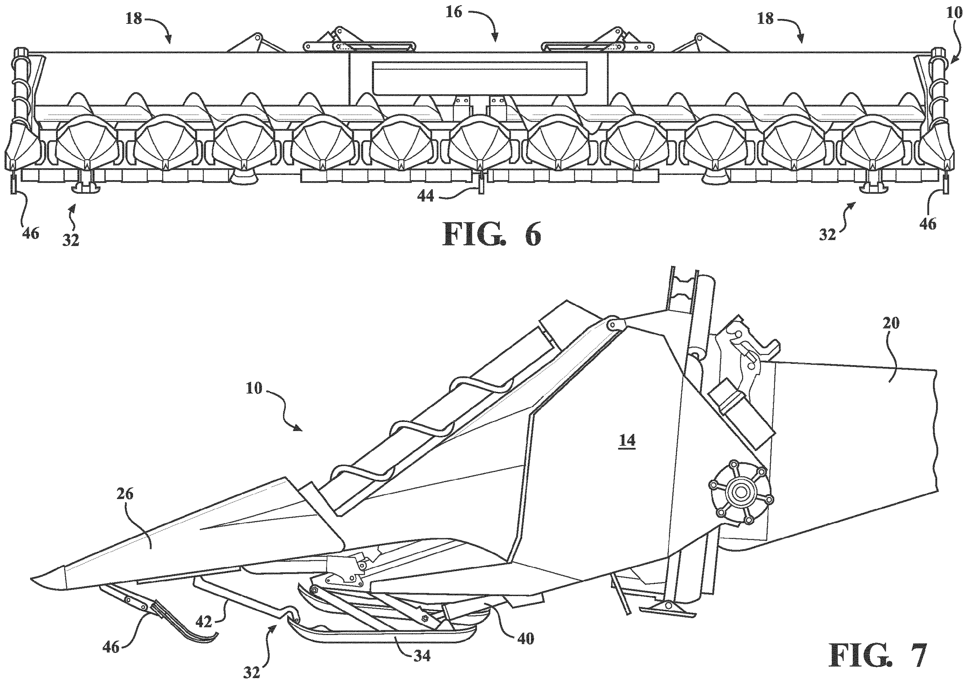

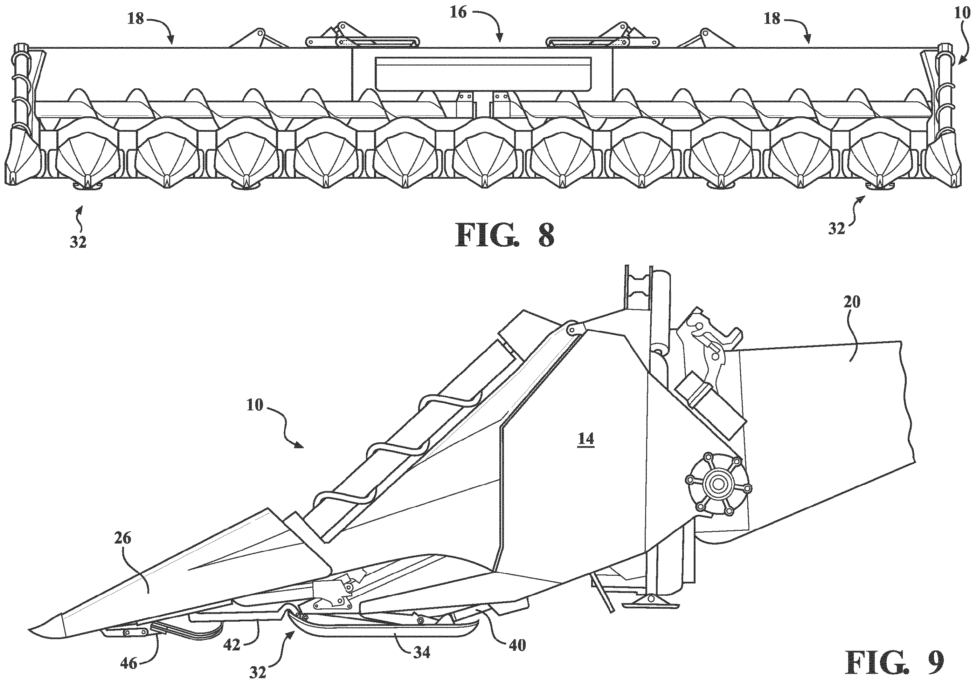

Referring to Figure 1, an auger assembly, shown generally at 30, is operatively coupled to the header frame 12 behind the crop cutting and conditioning system 24 and functions as a conveyor system to assist in transporting cut crops through the aperture 22. A skid shoe assembly 32 is further attached adjacent to each end 14 of the header frame 12 for setting and maintaining a cut height of the header 10 and engaging the surface of the field as the header 10 is moved across the field for harvesting the row crops. Referring to Figures 5, 7, and 9, the skid shoe assemblies 32 each include a skid shoe plate 34 for engaging the surface of the field. Each skid shoe plate 34 is rotatably coupled to the header frame 12 by substantially parallel front and rear attachment arms 36, 38. Although depicted as a skid shoe assembly 32, those having ordinary skill in the art will appreciate that any ground engaging device, such as a contour wheel, can be used to maintain the cut height of the header 10 without departing from the scope of the present invention. A hydraulic cylinder 40 extends between the header frame 12 and the respective pairs of rear attachment arms 38 for correspondingly rotating the front and rear pairs of attachment arms 36, 38 to move the skid shoe plates 34 between a plurality of positions, from fully extended (Figures 4-5), to partially extended (Figures 6-7) to fully retracted (Figures 8-9).

The header 10 may also include a stalk deflector 42 for diverting leaning or down crop stalks downwardly towards the ground and under the front of the skid shoe plate 34 so that the crop stalks do not hook, pinch or interfere with the front skid shoe attachment arm 36. The stalk deflector 42 is pivotally coupled to the skid shoe plate 34, and rotatably and slidably coupled to the bottom of the snout 26. Additional details regarding the header 10 are set forth in Applicant's co-pending Application No. PCT/US2022/022317, entitled "Flexing Header with Float System," filed March 29, 2022, the disclosure of which is incorporated by reference in its entirety.

Referring to Figures 1-9, the header 10 includes a center height sensor 44 and two outer height sensors 46. The center height sensor 44 is mounted on the header 10 below the center conical snout 26a, while the outer height sensors 46 are mounted on the header 10 at each end 14 of the header 10.

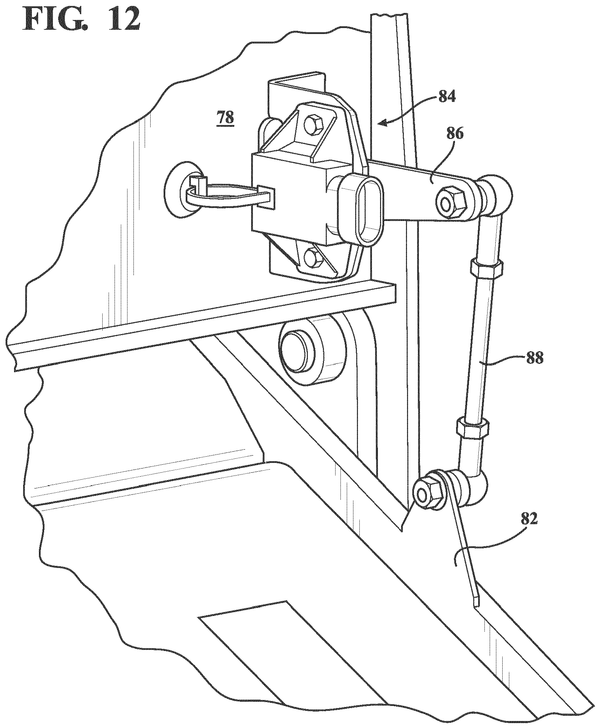

Referring to Figures 10-12, the header 10 also includes flex position sensors 84 mounted on each side edge 78 of the center section 16 of the header frame 12. A flex link 88 connects a sensor arm 86 on the flex position sensor 84 to the lower link 82. As the side wing sections 18 flex relative to the center section 16, the flex position sensors 84 determine the flex on each side wing section 18 (i.e., the angle formed between each side wing section 18 and the center section 16) based on the position of the sensor arm 86 on the flex position sensor 84.

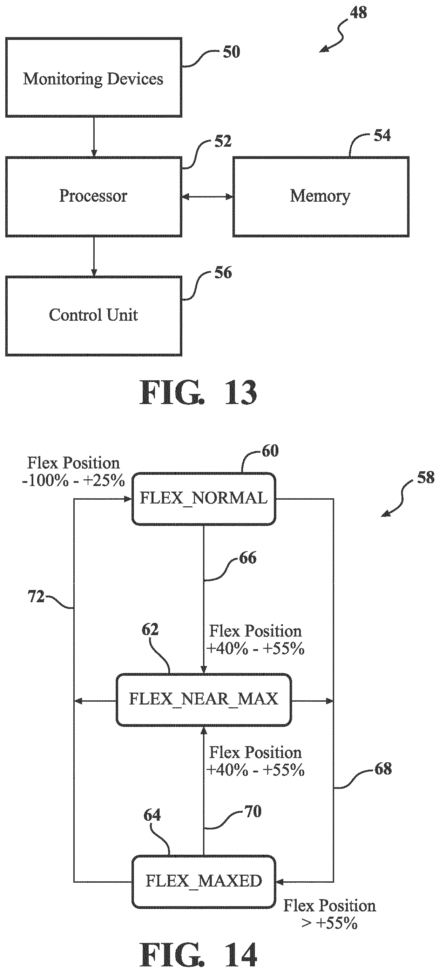

Referring to Figure 13, the header 10 includes a system 48 for controlling the components on the header 10. The system 48 includes monitoring devices 50, such as the height sensors 44, 46 and flex position sensors 84. The system 48 also includes a processor 52, memory 54 and one or more control units 56. The processor 64 processes the information from the monitoring devices 62 and uses that information to instruct the control units 68 to control various components of the header 10. The processor 64 also adjusts the information from the monitoring devices 62 and sends the adjusted signals to the agricultural implement or combine, as discussed below.

Most combines include an Automatic Header Height Control (AHHC) to ensure that the actual header height matches a desired header height set by the combine operator. Typically, the signals from the height sensors 44, 46 are sent directly to the combine, which uses some combination of these signals (e.g., an average value) to calculate an AHHC signal that reflects the actual header height. If the AHHC signal does not match the desired header height, the AHHC will automatically raise or lower the header 10 until the AHHC signal matches the desired header height. A low voltage AHHC signal means a low cut height. Thus, if the AHHC signal is lower than the combine set point, the combine will lift the header 10 until the AHHC signal matches the height set by the operator. A high voltage AHHC signal means a high cut height. Thus, if the AHHC signal is higher than the combine set point, the combine will lower the header 10 until the AHHC signal matches the height set by the operator.

In one embodiment of the present invention, the system 48 uses the center height sensor 44 as a target and adjusts the height of the skid shoe cylinders 40 so that the positions of the outer height sensors 46 match or come within a set threshold of the height measured by the center height sensor 44. The system 48 may either use the lower cut-height of the two outer sensors 46 as a feedback signal, or use the average of the signals from the two outer sensors 46 as a feedback. When the combine operator raises the AHHC setting on the combine, the system 48 will detect an increase in the header height from the center height sensor 44 and automatically adjust the position of the skid shoe assemblies 32 accordingly. If the operator lowers the header 10, the system 48 will detect the lower cut-height from center height sensor 44 and automatically lower (retract) the skid shoe assemblies 32 until position of the outer height sensors 46 comes within the set threshold of the position of the center height sensor 44.

Some combines include a tilt controller that detects changes in ground conditions and will laterally tilt the header 10 to follow the ground contours and minimize the chances that a side wing section 18 will contact the ground. If the tilt controller detects that one end (i.e., the right end or the left end) of the header 10 is closer to the ground than the other, as indicated by the signals from the outer height sensors 46, the tilt controller will tilt the header to equalize the distance between the end of each wing and the ground.

Rather than sending the signals from the height sensors 44, 46 directly to the combine, the present invention modifies these signals before sending them to the combine. For example, the present invention uses the signals from the flex position sensors 84 to determine the flex on each side wing section 18 and adjusts the outer height signals that are sent to the combine tilt controller to try to equalize the flex in each side wing section 18. In this way, the system 48 maximizes the flex range on both side wing sections 18 while minimizing the possibility that either side wing section 18 will exceed its maximum flex range. The present invention symmetrically offsets the outer height signals from the center AHHC signal based on the flex positions to ensure that the outer height signals do not affect the combine's calculation of the actual header height. In particular, the outer height signals that are fed to the combine are:

$$\text{Left Signal} = \text{Center Signal} + (\text{Left Flex} - \text{Right Flex}) * \text{Sensitivity}$$

$$\text{Right Signal} = \text{Center Signal} + (\text{Right Flex} - \text{Left Flex}) * \text{Sensitivity}$$

Each side wing section 18 has a maximum flex, or pivot, of approximately 7.5 degrees in both the upward (+100%) and downward (-100%) directions. It is not desirable to exceed the allowable flex range. If the flex range is exceeded in the downward direction, the cut height of the header 10 will not be uniform. There is little risk of mechanical damage to the header 10 in this circumstance because the force on the side wing sections 18 is limited to the weight of the side wing sections 18 themselves. However, when the upward flex range is exceeded, the weight of the combine adds significant force to the center section 16 of the header 10 and the flex linkage, making it more likely to cause mechanical damages to the header 10. In order to prevent damage to the header 10 from the side wing sections 18 flexing above maximum, the system 48 includes a "Max Flex" control logic 58, as reflected in Figure 14. The Max Flex control logic 58 alters the header control when either wing position approaches an upper flex limit. There are three stages in the Max Flex control logic 58: a flex_normal stage 60, a flex_near _max stage 62, and a flex_maxed stage 64.

The system 48 remains in the flex_normal stage 60 until the flex in one or both side wing sections 18 reaches a first threshold, e.g., +40% of the maximum flex. In the flex_normal stage 60, the system 48 will set the center AHHC signal to the signal from the center height sensor 44. The outer signals are symmetrically offset from the center AHHC signal based on the flex position, as described above. Also as discussed above, the skid shoe assemblies 32 are adjusted to match the position of the outer sensors 46 to the position of the center sensor 44. The system 48 records a running average of the center AHHC signal (e.g., at ½ second intervals with a 30-second running average) for use during the flex_maxed stage 64.

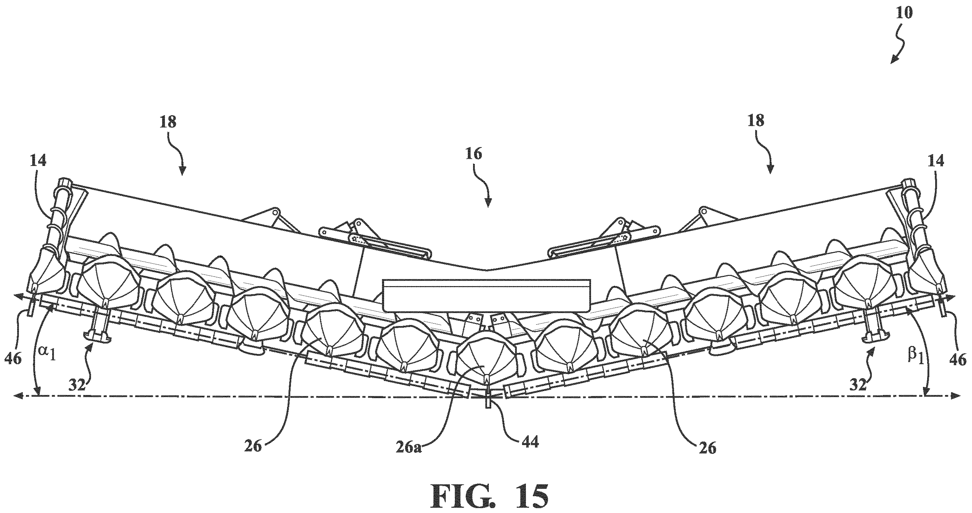

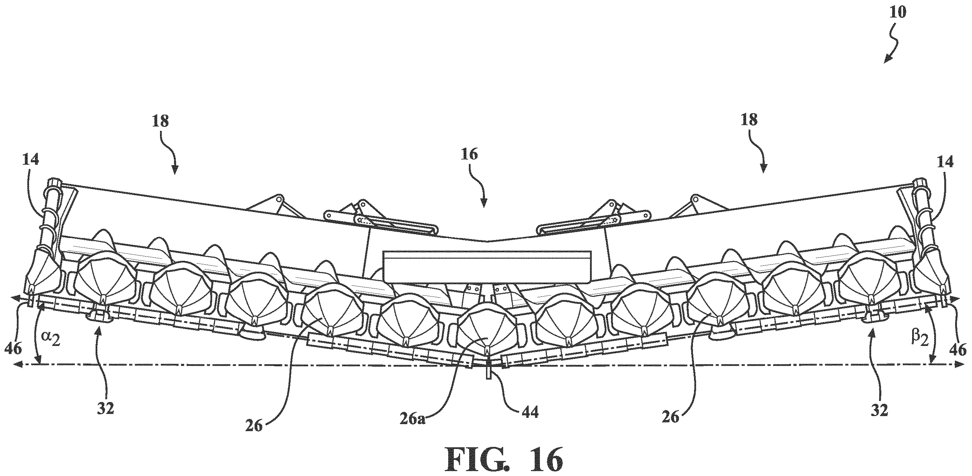

If the flex in either side wing section 18 exceeds the first threshold but does not exceed a second threshold (e.g., +55% of the maximum flex) (step 66), the system 48 operates in the flex_near_max stage 62. In the flex_near_max stage 62, the skid shoe assemblies 32 are retracted fully, which decreases the cut height at the ends 14 of the header 10. For example, referring to Figure 15, if the flex $\alpha_1$, $\beta_1$ in either side wing section 18 exceeds the first threshold, the system 48 will fully retract the skid shoe assemblies 32 to reduce the flex in both side wing sections 18 from $\alpha_1$ and $\beta_1$ to $\alpha_2$ and $\beta_2$, as reflected in Figure 16. Although this results in a lower cut-height than desired, it lowers the side wing sections 18 so that a sudden change in terrain does not cause either side wing section 18 to exceed its maximum flex. In the flex_near_max stage 62, the system 48 will continue to set the center AHHC signal to the signal from the center height sensor 44. Also, the system 48 continues to record a running average of the center AHHC signal for use during the flex_maxed stage 64.

Returning to Figure 14, if the flex in either side wing section 18 exceeds the second threshold (step 68), the system 48 operates in the flex_maxed stage 64. In the flex_maxed stage 64, in addition to fully retracting the skid shoe assemblies 32, the system 48 adjusts the center AHHC signal so that the combine will lift the center section 16 of the header 10. In the flex_maxed stage 64, the center AHHC signal is calculated based on the higher flex position (flex%) of the two side wing sections 18 and the previously recorded running average of the center height signal ($\text{ave}_{AHHC}$) using the equation below:

$$\text{AHHC} = \text{ave}_{AHHC} + (\text{second threshold} - \text{flex\%}) \times \text{sensitivity constant}$$

The sensitivity constant may be based on the second threshold level. For example, if the second threshold is +55%, the sensitivity constant may be set to 50. However, it will be appreciated that the value of the sensitivity constant may vary without departing from the scope of the invention.

For example, if the second threshold is +55%, the sensitivity constant is 50, the left wing position is +60%, the right wing position is +75%, and the average center AHHC sensor signal during normal operation is 2500 mV, the AHHC signal will be adjusted to:

$$\text{AHHC} = 2500 \text{ mV} + (55 - 75) \times 50 = 1300 \text{ mV}$$

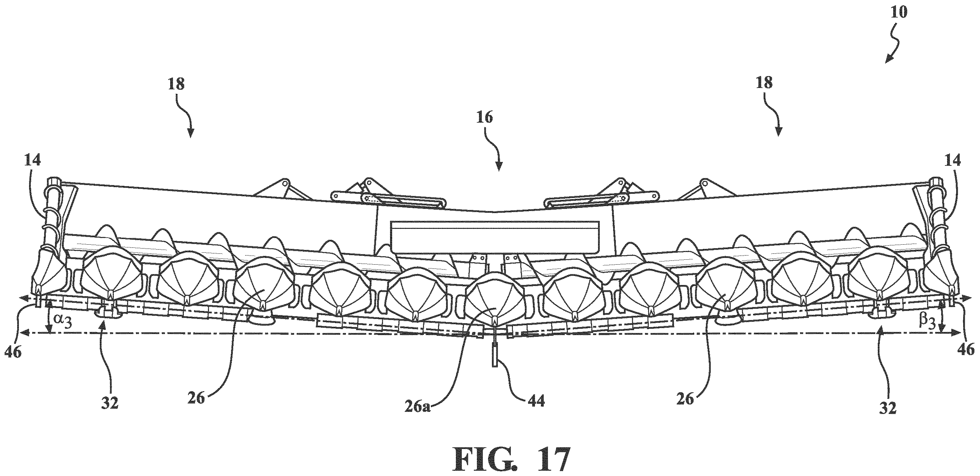

Thus, the AHHC signal decreases from 2500 mV to 1300 mV, which causes the combine to lift the header 10, which increases the cut-height at the center section 16 of the header 10. As a result, the side wing sections 18 flex down to a safer range. Referring to Figure 16, if the flex $\alpha_2$, $\beta_2$ in either wing is greater than the second threshold, raising the center section 16 of the header 10 will decrease the flex in the wings from $\alpha_2$ and $\beta_2$ to $\alpha_3$ and $\beta_3$, as reflected in Figure 17.

In the flex_maxed stage 64, because the skid shoe assemblies 32 are fully retracted, the cut-height is lower than desired on the ends 14 of the header 10, and because the center section 16 of the header 10 is raised, the cut-height is higher than desired in the center section 16 of the header 10. Thus, the present invention allows the header 10 to compromise cut height in order to function properly in infrequent extreme terrain without extra mechanical complexity and cost.

Returning to Figure 14, if the flex position for both wings transitions from above the second threshold to between the first and second thresholds (step 70), the system 48 returns to the flex_near_max stage 62 and resets the center AHHC signal back to the signal from the center height sensor 44. The skid shoe assemblies 32 remain fully retracted, and the system 48 begins recording a running average of the center AHHC signal.

Although the transition from flex_normal 60 to flex_near_max 62 occurs when the wing flex exceeds the first threshold, the return transition to flex_normal 60 (step 72) does not occur until the flex in both side wing sections 18 becomes less than a third threshold that is less than the first threshold (e.g., when the flex in both side wing sections 18 is less than +25%). In other words, both side wing sections 18 are required to drop below the third threshold before the skid shoe assemblies 32 are adjusted to match the position of the outer sensors 46 to the position of the center sensor 44. If the reverse transition (step 72) were to occur at the first threshold rather than at the third threshold, the extension of the skid shoe assemblies 32 may cause the flex in one or both side wing sections 18 to exceed the first threshold, which may cause the system to fluctuate between the flex_normal stage 60 and the flex_near_max stage 62 until the flex in both side wing sections 18 is less than the first threshold with both skid shoe assemblies 32 extended.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.


## Claims

1.    A method for adjusting a header mounted on an agricultural harvester, wherein the header includes a central section and a plurality of side wing sections, wherein each of the plurality of side wing sections extends between an inner portion and an outer portion, wherein the inner portion of each of the plurality of side wing sections is pivotally coupled to the central section, and wherein each of the plurality of side wing sections includes a ground engaging device mounted on the side wing section adjacent the outer portion, wherein each ground engaging device has an adjustable height, the method comprising the steps of:

    determining a height of the central section of the header;
    determining an outer wing height based on a height of one of the plurality of outer portions;
    determining whether the outer wing height is within a threshold of the height of the central section; and
    if it is determined that the outer wing height is not within the threshold of the height of the central section, adjusting the height of the ground engaging device until the outer wing height is within the threshold of the height of the central section.

2.    The method of claim 1, wherein if it is determined that the outer wing height is not within the threshold of the height of the central section:

    determining whether the outer wing height is greater than the height of the central section; and
    if it is determined that the outer wing height is greater than the height of the central section, lowering the ground engaging device.

3.    The method of claim 2, wherein if it is determined that the outer wing height is not greater than the height of the central section, raising the ground engaging device.

4.    The method of claim 1, wherein the step of determining the outer wing height comprises determining a lowest height of the plurality of outer portions.

5.    The method of claim 1, wherein the step of determining the outer wing height comprises determining an average height of the plurality of outer portions.

6.    A system on a header mounted on an agricultural harvester, wherein the header includes a central section and a plurality of side wing sections, wherein each of the side wing sections extends between an inner portion and an outer portion, wherein the inner portion of each of the plurality of side wing sections is pivotally coupled to the central section, and wherein each of the plurality of side wing sections includes a ground engaging device mounted on the side wing section adjacent the outer portion, wherein each ground engaging device has an adjustable height, the system comprising:

    a center sensor configured to measure a height of the central section;
    an outer sensor configured to measure a height of one of the plurality of outer portions; and

a processor configured to:

use the height of the one of the plurality of outer portions to determine an outer wing height; determine whether the outer wing height is within a threshold of the height of the central section; and if the processor determines that the outer wing height is not within the threshold of the height of the central section, the processor is configured to instruct a control unit to adjust the height of the ground engaging device until the outer wing height is within the threshold of the height of the central section.

7. The system of claim 6, wherein if the processor determines that the outer wing height is not within the threshold of the height of the central section:

the processor is configured to determine whether the outer wing height is greater than the height of the central section; and if the processor determines that the outer wing height is greater than the height of the central section, the processor is configured to instruct the control unit to lower the ground engaging device.

8. The system of claim 7, wherein if the processor determines that the outer wing height is not greater than the height of the central section, the processor is configured to instruct the control unit to raise the ground engaging device.

9. The system of claim 6, wherein the outer wing height comprises a lowest height of the plurality of outer portions.

10. The system of claim 6, wherein the outer wing height comprises an average height of the plurality of outer portions.

**FIG. 1**

FIG. 2

**FIG. 3**

FIG. 4

FIG. 5

EP 4 588 330 A1

FIG. 6

FIG. 7

FIG. 8

FIG. 9

FIG. 10

FIG. 11

EP 4 588 330 A1

FIG. 12

**FIG. 13**

**FIG. 14**

**FIG. 15**

EP 4 588 330 A1

**FIG. 16**

EP 4 588 330 A1

FIG. 17

Europäisches
Patentamt

European
Patent Office

Office européen
des brevets

## EUROPEAN SEARCH REPORT

**Application Number**

EP 24 22 0881

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/352847 A1 (HUNT CORY D [US] ET AL) 18 November 2021 (2021-11-18) | 1-10 | INV. A01D41/14 |
| Y | * paragraph [0001] * <br> * paragraph [0016] * <br> * paragraph [0020] - paragraph [0024] * <br> * paragraph [0031] - paragraph [0036] * <br> * paragraph [0042] * <br> * figures 1-8 * | 4,5,9,10 | |
| Y | US 2023/105797 A1 (FÜCHTLING CHRISTIAN [DE] ET AL) 6 April 2023 (2023-04-06) <br> * paragraph [0003] * <br> * paragraph [0042] - paragraph [0045] * <br> * figures 1-3 * | 4,9 | |
| Y | US 2020/390035 A1 (HUNT CORY DOUGLAS [US] ET AL) 17 December 2020 (2020-12-17) <br> * paragraph [0010] * <br> * paragraph [0047] - paragraph [0050] * <br> * figures 1-8 * | 5,10 | |
| X | US 2022/007575 A1 (FARLEY HERBERT M [US] ET AL) 13 January 2022 (2022-01-13) <br> * paragraph [0001] * <br> * paragraph [0025] - paragraph [0036] * <br> * paragraph [0042] - paragraph [0049] * <br> * figures 1-6 * | 1-10 | **TECHNICAL FIELDS SEARCHED (IPC)** <br><br> A01D |
| A | US 2018/368317 A1 (SCHULZE SELTING STEPHAN [DE] ET AL) 27 December 2018 (2018-12-27) <br> * paragraph [0001] * <br> * paragraph [0030] - paragraph [0040] * <br> * figures 1-4 * | 1-10 | |
| A | EP 2 832 206 A1 (CNH IND BELGIUM NV [BE]) 4 February 2015 (2015-02-04) <br> * paragraph [0001] * <br> * paragraph [0020] - paragraph [0024] * <br> * figure 3 * | 1-10 | |

The present search report has been drawn up for all claims

| Place of search | Date of completion of the search | Examiner |
|---|---|---|
| Munich | 28 May 2025 | Nicolai, Sébastien |

EPO FORM 1503 03.82 (P04C01)

## ANNEX TO THE EUROPEAN SEARCH REPORT
## ON EUROPEAN PATENT APPLICATION NO.

EP 24 22 0881

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | Publication date | Patent family member(s) | Publication date |
|---|---|---|---|
| US 2021352847 A1 | 18-11-2021 | BR 112021009508 A2 | 17-08-2021 |
| | | EP 3879958 A1 | 22-09-2021 |
| | | US 2021352847 A1 | 18-11-2021 |
| | | WO 2020101886 A1 | 22-05-2020 |
| US 2023105797 A1 | 06-04-2023 | DE 102021125815 A1 | 06-04-2023 |
| | | EP 4162789 A1 | 12-04-2023 |
| | | US 2023105797 A1 | 06-04-2023 |
| US 2020390035 A1 | 17-12-2020 | AU 2020293240 A1 | 06-01-2022 |
| | | BR 112021021374 A2 | 21-12-2021 |
| | | CA 3136244 A1 | 17-12-2020 |
| | | CN 113840531 A | 24-12-2021 |
| | | EP 3982711 A1 | 20-04-2022 |
| | | US 2020390035 A1 | 17-12-2020 |
| | | US 2022279719 A1 | 08-09-2022 |
| | | WO 2020252275 A1 | 17-12-2020 |
| US 2022007575 A1 | 13-01-2022 | AR 117086 A1 | 07-07-2021 |
| | | BR 112021009500 A2 | 10-08-2021 |
| | | EP 3879962 A1 | 22-09-2021 |
| | | US 2022007575 A1 | 13-01-2022 |
| | | WO 2020101992 A1 | 22-05-2020 |
| US 2018368317 A1 | 27-12-2018 | CA 3008964 A1 | 21-12-2018 |
| | | DE 102017113776 A1 | 27-12-2018 |
| | | EP 3420797 A1 | 02-01-2019 |
| | | HU E057707 T2 | 28-05-2022 |
| | | PL 3420797 T3 | 19-04-2022 |
| | | US 2018368317 A1 | 27-12-2018 |
| EP 2832206 A1 | 04-02-2015 | BR 102014018542 A2 | 17-11-2015 |
| | | EP 2832206 A1 | 04-02-2015 |
| | | US 2015033692 A1 | 05-02-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63622146

- US 2022022317 W